# EUROPEAN PATENT SPECIFICATION

(11) **EP 3 619 038 B1**
(45) Date of publication and mention of the grant of the patent: **25.11.2026**
(21) Application number: 18724993.3
(22) Date of filing: 24.04.2018
(51) Int. Cl.: B32B 7/12, B65D 65/46, B65D 85/804

(54) **A COMPOSTABLE MULTILAYER MEMBRANE AND CARTRIDGE USING SAID MEMBRANE**
KOMPOSTIERBARE MEHRSCHICHTIGE MEMBRAN UND DIESE KARTUSCHE VERWENDENDE MEMBRAN
MEMBRANE MULTICOUCHE COMPOSTABLE ET CARTOUCHE UTILISANT LADITE MEMBRANE

(30) Priority: 04.05.2017 IT 201700048363
(43) Date of publication of application: 11.03.2020
(73) Proprietor: Goglio S.p.A., 20144 Milano (IT)
(72) Inventor: BOSETTI, Osvaldo, 20144 Milano MI (IT); MACCAGNAN, Andrea, 20144 Milano MI (IT); GALBASINI, Roberto, 20144 Milano MI (IT); GULLO, Giuseppe, 20144 Milano MI (IT)
(74) Representative: Perani & Partners S.p.A.
(86) International application number: PCT/IB2018/052848
(87) International publication number: WO 2018/203184

(56) References cited:
- EP-A1- 2 218 653
- US-A1- 2013 323 370
- US-A1- 2017 008 694
- US-A1- 2017 107 034

## Description

### Field of the Invention

The present application relates to a compostable multilayer membrane as defined in the preamble of claim 1.

Particularly, but without limitation, the multilayer membrane is suitable for use in cartridges containing coffee or soluble products for producing a beverage by means of an extraction apparatus using water or other fluids under pressure or in fluid-tight containers or in other similar products or devices that must be sealed or stoppered.

### Background of the invention

Composting is an organic waste recycling process that is used to obtain a natural fertilizer, known as compost, comprising biodegradable organic materials that may be classified as wet matter (waste from fruit and vegetables, coffee grounds and tea filters, molded bread, eggshells and bones, grass clippings) and dry matter (dry leaves, sawdust, straw, small branches, wood shavings and bark, common paper and paper towel, cardboard).

According to the standard EN 13421, waste can be deemed to be compostable if it meets the following requirements: a) at least 90% biodegradability to be reached in less than 6 months; b) disintegrability, e.g. fragmentation and loss of visibility in the final compost. The fraction of the residues of test material with dimensions higher than 2 mm must be less than 10% of the initial mass; c) low levels of heavy metals and absence of negative effects on compost quality; d) stable pH, salinity, volatile solids, N, P, Mg, K values.

Increasing consumer awareness of waste disposal issues led a number of industries to look for new materials for manufacturing consumables, to meet sustainability requirements of the market.

Manufacturers of single-serve cartridges (or capsules) for containing ground coffee or other brewable beverages are greatly interested in this improvements, and have been developing sustainable solutions.

The following types of cartridges are currently available:
a) rigid or semi-rigid cartridges, comprising a container element made of a rigid or flexible non-compostable material (such as aluminum), and a closure element (also known as lid or membrane), made of aluminum. The two elements are heat-sealed to each other to form a containing cavity in which the brewable or soluble product is held. The cavity has oxygen and water barrier properties. These cartridges must have holes on opposite sides for the brewing or solubilizing liquid to enter the cavity and flow out for beverage dispensing.
b) filter paper cartridges, which both comprise a container body and a closure element made of filter paper or similar materials having no barrier properties. These cartridges oppose no resistance to oxygen and water. This second cartridge design requires the cartridge to be packaged in a barrier enclosure, e.g. made of aluminum, for preserving the organoleptic properties of the product, which requires the use of manufacturing systems having higher power consumption and costs;
c) rigid or semi-rigid cartridges, comprising a container element made of a rigid or flexible compostable material, and a closure element (also known as lid or membrane) made of filter paper. These cartridges oppose no resistance to oxygen and water. This third cartridge design requires the cartridge to be packaged in a barrier enclosure, e.g. made of aluminum, for preserving the organoleptic properties of the product, which requires the use of manufacturing systems having higher power consumption and costs.

US 2017/0107034 discloses a compostable container for preparing single-serve beverages by a dispensing machine, which comprises a container body, a filter and a lid. One of the layers of the lid is made of paper treated with a polymer having oxygen-resistance properties, which imparts barrier properties to the paper layer. The multilayer structure of US2017/0107034 is characterized by an Oxygen Transfer Rate (OTR) of less than 0.3 cc.mil/100 in².day.atm.

EP2218653 discloses a package comprising a shell, a fibrous layer fixed to a wall of the shell and a closing membrane hermetically fixed to the shell, in which the shell, the fibrous layer and the closing membrane are made of a multilayer of metallized cellulose comprising 2-layers.

US2017/0008694 discloses a capsule comprising a substantially rigid closed container body, having a bottom, side walls and a flange, with a closure element placed thereon to seal the container body. The capsule is made of a laminate comprising at least one oxygen barrier layer, sandwiched between two layers of a water-impermeable material that protect the oxygen barrier layer from alterations. The oxygen barrier layer and the water barrier layer are made of cellulose.

US2014/0037916 discloses a lid for single-serve packages of brewable beverages, comprising a compostable printed paper layer, a PLA layer and a compostable core sandwiched between these layers. A lid so obtained can provide an OTR of 0.4 cc/100 in²/day.

US2014/0366745, by the Applicant hereof, discloses cartridges for coffee or soluble products for producing brewable beverages, comprising a hollow container body having a tubular shape, which is hermetically closed at its opposite bases by a multilayer plastic film comprising a barrier film made of aluminum and at least one plastic film. The plastic film has at least one pre-score, preferably formed by laser, which has the purpose of facilitating rupture of the membrane under the action of the pressurized brewing liquid.

### Prior art problem

Therefore, the aforementioned prior art cartridges comprise materials that do not meet compostability requirements, i.e. the aluminum that is used to form the closure element or the barrier enclosure in which the filter paper cartridge is packaged.

Furthermore, US2017/0107034, EP2218653, US2017/0008694 and US2014/0037916 indicate that the compostable barrier layer of the lid is obtained using paper. For this purpose, paper (which is an inherently compostable material but has no oxygen barrier properties) must undergo suitable processing operations that affect both the cost of the manufacturing process and the resulting performances in terms or Oxygen Transfer Rate. That is, even when paper is treated to assume barrier properties, it does not ensure the achievement of OTR values that will preserve freshness and flavor properties of the soluble products held in the cartridge, for the increasingly long shelf lives required.

The OTR value of the multilayer structure of US2017/0107034 is indicated as 0.3 cc.mil/100 in².day.atm which, as expressed in SI units, such as cc/m²/day/atm, leads to an OTR value of 4.6.

Finally, the lid of US2014/0366745 is not made of compostable materials and does not meet the compostability requirements as set forth in the standard EN 13421.

### Object of the present invention

The invention has the object of providing a closure element, i.e. a membrane or lid, for cartridges that can be composted and can provide a barrier to the cartridge while maintaining the function of the latter, such as the function of dispensing the product by pressurized-fluid brewing.

These objects are fulfilled by a compostable multilayer membrane for cartridges containing soluble products or products adapted to be brewed by pressurized water or other fluid, as defined in the annexed claims.

### Advantages of the Invention

The present invention can provide a membrane that has the same barrier properties as aluminum, while meeting compostability requirements.

Furthermore, the present invention can provide a membrane that is able to ensure proper dispensing of the product by pressurized-fluid brewing.

That is, the present invention can provide a cartridge or capsule for soluble products or products adapted to be brewed by pressurized water or other fluid, which comprises a container body made of a biodegradable or compostable material, which defines a hermetically sealed volume at two opposite bases, in which the soluble or brewable product is held, and at least one compostable multilayer membrane.

### BRIEF DESCRIPTION OF THE FIGURES

The characteristics and advantages of the present disclosure will appear from the following detailed description of possible practical embodiments thereof, which are shown as non-limiting examples in the drawings, in which:
- Figure 1 is a diagrammatic view of a cartridge 1 of the invention, comprising a container body 2 that defines a hermetically sealed volume 3, between the top wall 4 and the bottom wall 5, where the top wall 4 consists of the compostable multilayer membrane of the invention, which acts as sealing membrane;
- Figure 2 is a diagrammatic view of a cartridge 1 of the invention, comprising a container body 2 that defines a hermetically sealed volume 3, between the top wall 4 and the bottom wall 5, and a partition 6 for closing the bottom wall 5;
- Figure 3 shows a diagrammatic view of the compostable multilayer membrane of the invention.

### DETAILED DESCRIPTION OF THE INVENTION

Although this is not expressly shown, the individual features described with reference to each embodiment shall be intended as auxiliary and/or interchangeable with other features, as described with reference to other embodiments.

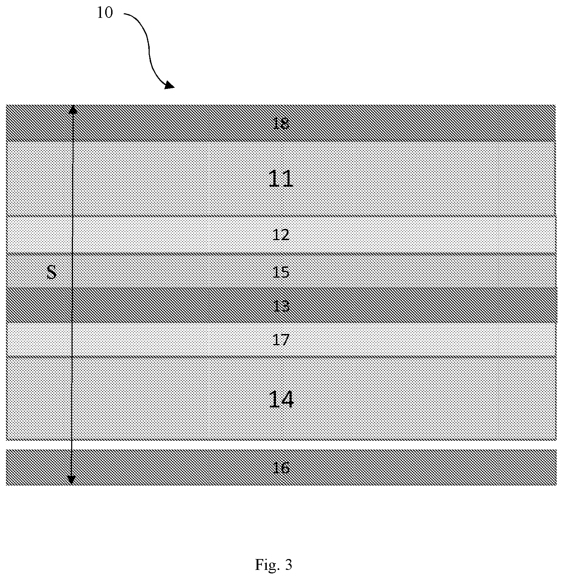

The structure and advantages of the multilayer membrane or lid of the invention, as well as the cartridges containing the same, are also described below, with reference to Figure 3.

As used herein, the term barrier film is intended to designate a film that has oxygen-, water-, gas- or flavor-resistance properties or a combination thereof.

The term oriented film is intended to designate a polymeric film whose polymer chains are extended and oriented in one or more common directions. The ability of a polymer to withstand a mechanical load depends on the strength of covalent bonds and on the forces between the molecules. In an amorphous system the load is carried by weak Van der Waals interactions occurring between polymeric chains in random "coil" configurations. If a substantial fraction of the polymeric chains may be aligned in the load direction, a greater portion of the load may be transferred to the covalent bonds of the main chain. This orientation results in a greater strength of the oriented material in the orientation direction. Conversely, the orientation has an adverse effect on the layer elongation properties, on easy cutting and sealability.

Irrespective of layer orientation, the compostable multilayer membrane has an elastic modulus, i.e. a puncture resistance, that preferably ranges from 3 N to 30 N, as measured according to ASTM F 1306.

Alternatively, the compostable multilayer membrane has an elastic modulus, i.e. a puncture resistance, that ranges from 2 to 15 N, as measured according to the guidelines of DIN 14477.

In a peculiar aspect, the multilayer membrane 10 has a thickness S that ranges from 40 to 200 µm.

The thickness of the membrane 10 is a critical parameter for the function of a cartridge, as the breaking strength of the cartridge under pressure relies thereon.

The Applicant found that an increased thickness of the material of the membrane 10 would require the dispensing pressure of the brewing fluid to be accordingly increased, which would possibly cause the dispensing machine to be shut down due over-pressure.

In one aspect, the compostable multilayer membrane 10 comprises:
- a first barrier layer 11 containing a compostable barrier film;
- a metallization state 12;
- an intermediate layer 13 containing at least one adhesive;
- a second barrier layer 14 containing a compostable barrier film.

Namely, the first barrier layer 11 represents the outer layer and the second barrier layer represents the inner layer of the multilayer membrane 10.

In one aspect, the compostable barrier film of the first barrier layer 11 and the second barrier layer 14 is oriented or non-oriented and is not made of cellulosic material or paper.

The multilayer membrane 10 comprises a layer 18 adjacent to the first barrier layer 11, on a side opposite to the side upon which the metallization layer 12 has been deposited, which comprises a heat-resistant lacquer.

The layer of heat-resistant lacquer 18 advantageously allows the compostable barrier film of the first barrier layer 11 and the second barrier layer 14 to be formed with products that are not made of cellulosic material or paper, thereby ensuring that the membrane 10 may be sealed to the body of a cartridge.

In one aspect, the compostable multilayer membrane 10 comprises a second metallization layer 17 disposed between the intermediate layer 13 and the second barrier layer 14.

This second metallization layer 17 allows the second layer 14 that contains the compostable film to also have barrier properties.

The embodiments of the compostable multilayer membrane 10 as described below advantageously provide oxygen barrier values, i.e. An Oxgen Trasfer Rate (OTR), of less than 0.1 cc/m²/day/atm at 0% relative humidity (RH) and at 23 °C, irrespective of the thickness of the compostable multilayer membrane 10. It shall be further noted that the OTR does not depend on the thickness of the barrier layer 11, 14, but on the metallization layer 12.

As used hereinbelow, the term outer is intended to designate the membrane surface that faces the outside or the surrounding environment, whereas the term inner layer is intended as the surface of the membrane that, in operation, faces the volume enclosed by a cartridge o a container, i.e. the surface of the membrane opposite to the one that faces the outside environment.

### 1 ^{st} embodiment

In a first embodiment, the compostable multilayer membrane 10 comprises first and second barrier layers 11, 14 containing a compostable oriented barrier film.

The Applicant found that the compostable multilayer membrane 10 formed according to the first embodiment, in view of ensuring proper function of the cartridge 1, has an elastic module, i.e. a puncture resistance, preferably ranging from 15 to 30, as measured according to ASTM F 1306.

The preferred compostable oriented film is cellophane, which advantageously exhibit compostabiity and oxygen-resistance properties.

Cellophanes as used for the purposes of the present invention are preferably cellophanes that have tearing or self-tearing properties under the pressure of a fluid.

The metallization layer 12 advantageously increases the oxygen barrier properties of the first barrier layer and creates a moisture barrier.

Metallization can be carried out using well-known techniques, in which, as a rule, the metal selected for deposition is suitably heated and later sprayed on the surface of interest.

Preferably, the metal that is used for the metallization layer 12 is aluminum. More preferably, such aluminum layer has a thickness that ranges from 200 Å to 500 Å.

In one alternative embodiment, the metallization layer 12 is formed by depositing SiOx and AlOx oxides.

The metallization layer 12 and the second barrier layer 14, are separated by an intermediate layer 13 containing at least one adhesive, where said at least one adhesive is preferably selected from compostable or non-biocompostable adhesives.

The weight contribution of said intermediate layer 13 is such that to ensure that, even when at least one non-compostable adhesive is contained, the entire multilayer membrane meets the requirements of biocompostability.

The intermediate layer 13 preferably comprises an adhesive selected from the group composed of polyurethane adhesives; one-, two- or multi-component adhesives; adhesives comprising blocked isocyanates (i.e. isocyanate groups with a protected reactive group that may be removed at high cross-linking temperatures), pressure-sensitive adhesives (PSA). Non-limiting examples of PSA adhesives are, for example, acrylate polymers, butyl, ethylene-vinyl acetate (EVA) rubber with high vinyl acetate content, natural rubber, nitryls, silicone rubbers, which require special "MQ" silicate resin tackifying agents, a monofunctional ("M") trimethyl silane compound reacted with quadrifunctional ("Q") silicon tetrachloride, styrene block copolymers (SBC), also known as styrene copolymer adhesives and rubber-based adhesives, styrenebutadiene-styrene (SBS), styrene-ethylene/butylene-styrene (SEBS), styrene-ethylene/propylene (SEP), styrene-isoprene-styrene (SIS), vinyl ethers and mixtures thereof.

Preferably, the intermediate layer 13 of the compostable multilayer membrane 10 comprises a polyurethane adhesive, preferably a multi-component polyurethane adhesive.

More preferably, the multi-component polyurethane adhesive comprises an isocyanate component. It shall be noted that the isocyanate component may be, for example, of aromatic, aliphatic or cycloaliphatic type and may have an average functionality of more than 2.

By way of illustration and without limitation, said isocyanate may comprise, for example, at least one of toluene diisocyanate (TDI), methylene diphenyl diisocyanate (MDI), phenylene diisocyanate, xilylene diisocyanate, diphenyl methane diisocyanate, polyphenylmethane polyisocyanate (polymeric MDI), naphthalene diisocyanate, triphenylmethane triisocyanate, diphenyl sulfone diisocyanate, cyclohexane diisocyanate, ethylene diisocyanate, propylene diisocyanate, tetramethylene diisocyanate, examethylene diisocyanate, isophorone diisocyanate (IPDI), dimers and trimers of these diisocyanates or mixtures thereof.

In a preferred embodiment, the polyurethane adhesive further comprises a plasticizer.

For the purposes of the present invention, the polyurethane adhesive is preferably a solvent-free, solvent-based or water-based adhesive.

In an alternative embodiment, the polyurethane adhesive preferably comprises at least any one of a conventional commercially available catalyst, an inorganic filler, a dye, an antioxidant, a UV absorber, an adhesion promoter, a calcium oxide, included expandable microspheres (e.g. known under the trade name EXPANCEL^{®}), drying agents, or mixtures thereof.

According to an alternative embodiment, the polyurethane adhesive preferably comprises at least any one of the conventional commercially available organic fillers, chain extenders, UV stabilizers, light stabilizers, fungicides, biocides, antimold agents, flame retardants, surface additives, solvents, mineral oils, dispersing agents, antifoaming agents, storage stabilizers, latent curing agents, cure retarders, solvents, or mixtures thereof.

It shall be noted that in this first embodiment, the compostable multilayer membrane 10 preferably comprises a second metallization layer 17 disposed between the intermediate layer 13 and the second barrier layer 14.

This metallization layer 17 improves the oxygen barrier properties of the second barrier layer and creates a moisture barrier.

Preferably, the metal that is used for the metallization layer 17 is aluminum.

More preferably, such aluminum layer has a thickness that ranges from 200 Å to 500 Å.

Alternatively, the metallization layer 17 is formed by depositing SiOx and AlOx oxides.

Preferably, the multilayer membrane 10 of the invention comprises a heat-resistant lacquer layer 18 adjacent to the first barrier layer 11, on a side opposite to the side upon which the metallization layer 12 is deposited. This heat-resistant lacquer layer 18 faces out of the membrane 10.

Suitable materials for the heat-resistant lacquer include, for example, lacquers based on chlorovinyl resin, polyurethane resin, nitro-polyurethane resin, nitro-acrylic resin; nitrocellulose resin; polyester resin; cellulose; acrylic resin; styrene resin; acrylic-styrene resin; epoxy resin; alkyd resin; melamine resin; siloxane resins; urethane resins; urea resins.

It shall be noted that, according to a more preferred embodiment of the first embodiment, the compostable multilayer membrane 10 comprises a filter 16, adjacent to the second barrier layer 14, on a side opposite to the one that is coupled with the intermediate layer 13 comprising the adhesive.

In the configuration of the compostable multilayer membrane 10, as described hitherto in this first embodiment, the membrane 10 has an OTR value of less than 0.5 cc/m2/day/atm.

If the OTR value is to be calculated as a function of the thickness of the membrane 10 (even though this is inappropriate, as the OTR value of does not depend on the thickness of the barrier layers 11, 14), still in the configuration as described above with reference to the first embodiment, the membrane 10 has an OTR value of 0.057 cc/100in²/day/atm.

Preferably said filter 16 is made of a nonwoven fabric, e.g. a polylactic acid (PLA) nonwoven fabric.

The filter 16 may be combined or not combined with the compostable multilayer membrane.

If the filter 16 is combined, it is preferably bonded to the membrane by well-known techniques such as by heat sealing, gluing, spot-gluing where gluing is preferably carried out by means of compostable or non-compostable adhesives.

According to a more preferred embodiment of the first embodiment, the compostable multilayer membrane comprises a third barrier layer 15, interposed between the intermediate layer 13 and the metallization layer 12, comprising a lacquer having oxygen barrier properties.

The lacquer having barrier properties is preferably selected from the group comprising lacquers based on PVDC; polyvinyl alcohol resin as such or modified with silanes; cellulose; acrylic resin; epoxy resin.

Said third barrier layer 15 is preferably coupled to the metallization layer 12 by a primer selected, for example, from polyurethane, isocyanate, isocellulose.

In the configuration of the compostable multilayer membrane 10, as described hitherto in this first embodiment, which also comprises the lacquer having barrier properties 15, the membrane 10 has an OTR value of less than 0.1 cc/m²/day/atm.

### 2^{nd} embodiment

In a second embodiment of the compostable multilayer membrane 10, also referring to Figure 3, the membrane comprises first and second barrier layers 11, 14 containing a compostable non-oriented barrier film.

It shall be noted that the considerations suggested for the first embodiment are also applicable to the second embodiment.

Namely, according to said second embodiment, the compostable multilayer membrane 10 has an elastic modulus that ranges from 3 to 20 N, as measured according to ASTM F 1306 and a thickness S that ranges from 40 to 200 µm.

Said compostable non-oriented film is, for example, a polymeric film formed by the cast technology, based on polyesters, polylatic acid, starch resins.

Advantageously said compostable non-oriented film has remarkable fragility features.

A polymeric film is deemed to be non-oriented when the polymeric chains are in a random coil configuration and no common direction of orientation can be identified. Generally, non-oriented polymeric films are amorphous polymeric films.

The metallization layer 12 advantageously increases the oxygen-proof properties of the first barrier layer and creates a moisture barrier.

Metallization can be carried out using well-known techniques, in which, as a rule, the metal selected for deposition is suitably heated and later sprayed on the surface of interest.

Preferably, the metal that is used for the metallization layer is aluminum. More preferably, such aluminum layer has a thickness that ranges from 200 Å to 500 Å.

Alternatively, the metallization layer 12 is formed by depositing SiOx and AlOx oxides.

The metallization layer 12 is separate from the second barrier layer 14 by an intermediate layer 13 containing at least one adhesive, where said at least one adhesive is preferably selected from compostable or non-compostable adhesives.

The weight contribution of said intermediate layer 13 is such that to ensure that, even when at least one non-compostable adhesive is contained, the entire multilayer membrane meets the requirements of biocompostability.

The intermediate layer 13 preferably comprises a polyurethane adhesive which, for the purposes of the present invention, may be a one- or two-component adhesive and is preferably a solvent-free, solvent-based or water-based adhesive.

In an alternative embodiment, the compostable multilayer membrane 10 comprises an additional metallization layer 17 disposed between the intermediate layer 13 and the second barrier layer 14.

It shall be noted that, in an alternative embodiment, the membrane of the invention comprises an outer layer 18 adjacent to the first barrier layer 11, on a side opposite to the side upon which the metallization layer 12 has been deposited, which comprises a heat-resistant lacquer.

Suitable materials for the heat-resistant lacquer include, for example, lacquers based on chlorovinyl resin, polyurethane resin, nitro-polyurethane resin, nitro-acrylic resin; nitrocellulose resin; polyester resin; cellulose; acrylic resin; styrene resin; acrylic-styrene resin; epoxy resin; alkyd resin; melamine resin; siloxane resins; urethane resins; urea resins.

It shall be noted that, according to a more preferred embodiment, the multilayer membrane 10 comprises a filter 16, adjacent to the second barrier layer 14, on a side opposite to the one that is coupled with the intermediate layer 13 comprising the adhesive.

Preferably said filter 16 is made of a nonwoven fabric, e.g. a polylactic acid (PLA) nonwoven fabric.

The filter 16 may be combined or not combined with the compostable multilayer membrane.

If the filter 16 is combined, it is preferably bonded to the membrane by well-known techniques such as by heat sealing, gluing, spot-gluing, where gluing is preferably carried out by means of compostable or non-compostable adhesives.

According to a more preferred embodiment, the compostable multilayer membrane 10 comprises a third barrier layer 15, interposed between the intermediate layer 13 and the metallization layer 12, comprising a lacquer having oxygen barrier properties.

The lacquer having barrier properties is preferably selected from the group comprising lacquers based on PVDC; polyvinyl alcohol resin as such or modified with silanes; cellulose; acrylic resin; epoxy resin.

Said third barrier layer 15 is preferably coupled to the first metallization layer 12 by a primer selected, for example, from polyurethane, isocyanate, isocellulose.

### 3^{rd} embodiment

In a third embodiment, the compostable multilayer membrane 10 comprises a first barrier layer 11 containing a compostable non-oriented barrier film and a second barrier layer 14 containing a compostable oriented film.

It shall be noted that the considerations suggested for the first and second embodiments are also applicable to the third embodiment.

Here, the compostable multilayer membrane 10 ha an elastic modulus that preferably ranges from 9 to 16 N, as measured according to ASTM F 1306.

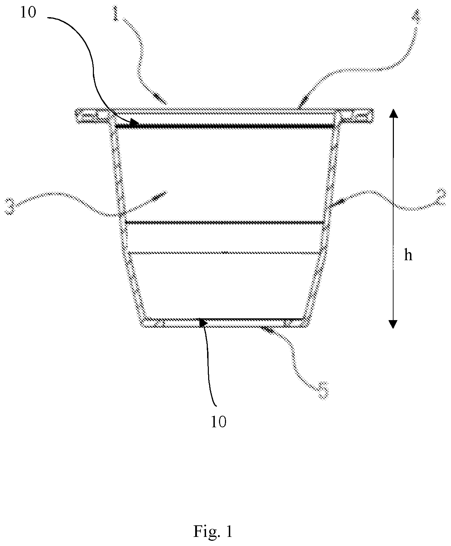

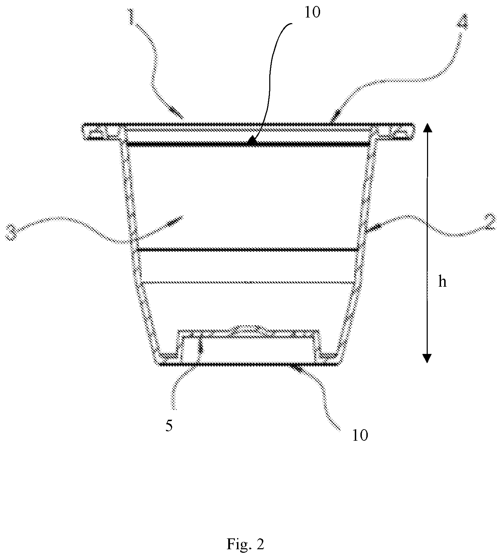

Referring now to Figures 1 and 2, special implementations of the compostable multilayer membrane 10 in cartridges 1 containing coffee or other soluble or brewable products will be described.

It shall be noted that the compostable multilayer membrane 10 may be used in cartridges 1 of any shape and size, that have to meet compostability and barrier property requirements.

Figure 1 schematically shows a cartridge 1 of the present invention for containing coffee or other soluble or brewable products, which comprises a container body 2 made of biodegradable material, defining a closed volume 3 at two opposite bases 4 and 5 in which the soluble or brewable product (not shown) is held.

Namely, one base defines a top wall 4 and the other base defines the bottom wall 5 that hermetically seal the volume 3.

The top wall 4 and the bottom wall 5 define a height h of the container body 2. Said height preferably ranges from 20 to 30 mm.

As used hereinbelow, the term biodegradable is intended as the ability of organic substances and materials to be degraded to simpler molecules through a series of irreversible chemical reactions. The level of biodegradation required for a material to be certified as biodegradable is at least 90% to be reached in less than 6 months.

The container body of the biodegradable cartridge 1 is selected, for example, from the group comprising biodegradable materials such as corn starch, potato starch, cellulose, Mater-Bi and/or any combination of these materials.

In an alternative embodiment, the container body 2 of the cartridge 1 is formed with a compostable material, e.g. a compostable cast material based on polyesters/PLA/starch resins.

It shall be noted that at least one of the top wall 4 and the bottom wall 5 or both are composed of the compostable multilayer membrane 10 as described herein.

The compostable multilayer membrane 10 can advantageously preserve the organoleptic properties of the soluble or brewable product during transport and storage, by providing oxygen- and water-barrier properties, while ensuring compliance with the biodegradabilty and/or biocompostabilty requirements, as it constitutes a hermetic seal for the volume 3.

The membrane 10 also advantageously exhibits such penetrability/frangibility and/or thickness properties as to be opened under the pressure of the brewing liquid. In this respect, for the pressurized water or other fluid to flow through the volume containing the brewable or soluble product, the membrane 10 is preferably broken by cusps or needles.

The compostable multilayer membrane 10 is not scored.

It shall be noted that, in certain embodiments of the cartridge of the invention, the compostable multilayer membrane 10 may contact the brewable or soluble product in the cartridge via the filter 16 contained therein.

**In** a second embodiment of the cartridge 1, also referring to Figure 2, the bottom wall 5 is recessed toward the hermetically sealed volume 3.

**In** this embodiment, a volume is defined between the bottom wall 5 and the membrane 10 as the latter is separate from the bottom wall 5.

Those skilled in the art will obviously appreciate that a number of changes and variants as described above may be made to fulfill particular requirements, without departure from the scope of the invention, as defined in the following claims.

## Claims

1. A compostable multilayer membrane (10), for cartridges containing soluble products or products adapted to be brewed by pressurized water or other fluid, comprising:
- a first barrier layer (11) containing a compostable barrier film according to the standard EN 13421;
- a first metallization layer (12) having a thickness;
- an intermediate layer (13) containing at least one adhesive;
- a second barrier layer (14) containing a compostable barrier film according to the standard EN 13421;
wherein the barrier films of the first and second barrier layers (11, 14) have oxygen, water, gas or flavor resistance properties or a combination thereof;
**characterized in that** it comprises:
- a layer (18) adjacent to the first barrier layer (11), on a side opposite to the side upon which the metallization layer (12) has been deposited, which comprises a heat-resistant lacquer;
- a second metallization layer (17) disposed between the intermediate layer (13) and said second barrier layer (14);
- said compostable barrier film of said first barrier layer (11) and said second barrier layer (14) not being made of paper,
such that said compostable multilayer membrane (10) will have an OTR value of less than 0.5 cc/m²/day/atm at 0% relative humidity and at 23 °C, the OTR value depending on the thickness of the metallization layer (12).

2. A compostable multilayer membrane as claimed in claim 1, having a thickness (S) that ranges from 40 to 200 µm.

3. A compostable multilayer membrane as claimed in claim 1 or 2, wherein said membrane has an elastic modulus that ranges from 3 to 30 N, as measured according to ASTM F 1306.

4. A compostable multilayer membrane as claimed in any of the preceding claims, wherein said compostable barrier film of said first barrier film (11) and said second barrier film (14) is oriented or non-oriented.

5. A compostable multilayer membrane as claimed in any of claims 1 to 4, where said adhesive is preferably selected from the group composed of: polyurethane adhesives; one-, two- or multi-component adhesives; adhesives comprising blocked isocyanates, pressure-sensitive adhesives (PSA).

6. A multilayer membrane as claimed in claim 1, comprising a third barrier layer (15) containing a lacquer having oxygen-barrier properties, so that said multilayer membrane (10) will have an OTR value of less than 0.1 cc/m²/day/atm.

7. A multilayer membrane as claimed in claim 6, wherein said lacquer having oxygen-barrier properties is preferably selected from the group comprising lacquers based on PVDC; polyvinyl alcohol resin as such or modified with silanes; cellulose; acrylic resin; epoxy resin.

8. A multilayer membrane as claimed in the preceding claim 1, wherein said first metallization layer (12) and/or said second metallization layer (17) are composed of aluminum.

9. A multilayer membrane as claimed in the preceding claim 8, wherein said first metallization layer (12) has a thickness that ranges from 200 Å to 500 Å.

10. A multilayer membrane as claimed in claim 1, wherein said first metallization layer (12) and/or said second metallization layer (17) are formed by deposition o SiOx an AlOx oxides.

11. A multilayer membrane as claimed in claim 1, comprising a filter (16) that is made of a nonwoven fabric and is adj acent to the second barrier layer (14), on a side opposite to the one that is coupled with the intermediate layer (13) comprising the adhesive.

12. A multilayer membrane as claimed in claim 1, comprising a third barrier layer (15), interposed between said intermediate layer (13) and said first metallization layer (12), comprising a lacquer having oxygen barrier properties.

13. A multilayer membrane as claimed in claim 12, wherein said lacquer having oxygen-barrier properties of said third barrier layer (15) is selected from the group comprising lacquers based on PVDC; polyvinyl alcohol resin as such or modified with silanes; cellulose; acrylic resin; epoxy resin.

14. A multilayer membrane as claimed in claim 12 or 13, wherein said lacquer having oxygen barrier properties of said third barrier layer (15) is coupled to said metallization layer (12) using a primer.

15. A cartridge for soluble products or products adapted to be brewed by pressurized water or other fluid, comprising a container body made of a compostable or biodegradable material, which defines a hermetically sealed volume at two opposite bases, in which the soluble or brewable product is held, wherein one or both of said two opposite bases is formed with a multilayer membrane as claimed in any of claims 1 to 14.

## Patentansprüche

1. Kompostierbare Mehrschichtmembran (10) für Kapseln, die lösliche Produkte oder Produkte enthalten, die dazu eingerichtet sind, durch unter Druck stehendes Wasser oder ein anderes Fluid aufgebrüht zu werden, umfassend:
• eine erste Barriereschicht (11), die eine kompostierbare Barrierefolie gemäß der Norm EN 13421 enthält;
• eine erste Metallisierungsschicht (12), die eine Dicke aufweist;
• eine Zwischenschicht (13), die mindestens einen Klebstoff enthält;
• eine zweite Barriereschicht (14), die eine kompostierbare Barrierefolie gemäß der Norm EN 13421 enthält; wobei die Barrierefolien der ersten und der zweiten Barriereschicht (11, 14) Sauerstoff-, Wasser-, Gas- oder Aromabeständigkeitseigenschaften oder eine Kombination davon aufweisen;
**dadurch gekennzeichnet, dass** sie umfasst:
• eine Schicht (18) angrenzend an die erste Barriereschicht (11) auf einer Seite gegenüber der Seite, auf der die Metallisierungsschicht (12) abgeschieden worden ist, die einen hitzebeständigen Lack umfasst;
• eine zweite Metallisierungsschicht (17), die zwischen der Zwischenschicht (13) und der zweiten Barriereschicht (14) angeordnet ist;
• wobei die kompostierbare Barrierefolie der ersten Barriereschicht (11) und der zweiten Barriereschicht (14) nicht aus Papier hergestellt ist, sodass die kompostierbare Mehrschichtmembran (10) einen OTR-Wert von weniger als 0,5 cc/m²/Tag/atm bei 0 % relativer Feuchtigkeit und bei 23 °C aufweist, wobei der OTR-Wert von der Dicke der Metallisierungsschicht (12) abhängt.

2. Kompostierbare Mehrschichtmembran nach Anspruch 1, mit einer Dicke (S), die im Bereich von 40 bis 200 µm liegt.

3. Kompostierbare Mehrschichtmembran nach Anspruch 1 oder 2, wobei die Membran einen Elastizitätsmodul aufweist, der im Bereich von 3 bis 30 N liegt, gemessen gemäß ASTM F 1306.

4. Kompostierbare Mehrschichtmembran nach einem der vorhergehenden Ansprüche, wobei die kompostierbare Barrierefolie der ersten Barrierefolie (11) und der zweiten Barrierefolie (14) orientiert oder nicht-orientiert ist.

5. Kompostierbare Mehrschichtmembran nach einem der Ansprüche 1 bis 4, wobei der Klebstoff vorzugsweise ausgewählt ist aus der Gruppe bestehend aus: Polyurethanklebstoffen; Ein-, Zwei- oder Mehrkomponentenklebstoffen; Klebstoffen, die blockierte Isocyanate umfassen; Haftklebstoffen (PSA).

6. Mehrschichtmembran nach Anspruch 1, umfassend eine dritte Barriereschicht (15), die einen Lack mit Sauerstoffbarriereeigenschaften enthält, sodass die Mehrschichtmembran (10) einen OTR-Wert von weniger als 0,1 cc/m²/Tag/atm aufweist.

7. Mehrschichtmembran nach Anspruch 6, wobei der Lack mit Sauerstoffbarriereeigenschaften vorzugsweise ausgewählt ist aus der Gruppe umfassend Lacke auf Basis von PVDC; Polyvinylalkoholharz als solchem oder modifiziert mit Silanen; Cellulose; Acrylharz; Epoxidharz.

8. Mehrschichtmembran nach dem vorhergehenden Anspruch 1, wobei die erste Metallisierungsschicht (12) und/oder die zweite Metallisierungsschicht (17) aus Aluminium bestehen.

9. Mehrschichtmembran nach dem vorhergehenden Anspruch 8, wobei die erste Metallisierungsschicht (12) eine Dicke aufweist, die im Bereich von 200 Å bis 500 Å liegt.

10. Mehrschichtmembran nach Anspruch 1, wobei die erste Metallisierungsschicht (12) und/oder die zweite Metallisierungsschicht (17) durch Abscheidung von SiOx und AlOx-Oxiden gebildet sind.

11. Mehrschichtmembran nach Anspruch 1, umfassend ein Filter (16), das aus einem Vliesstoff hergestellt ist und an die zweite Barriereschicht (14) auf einer Seite angrenzt, die derjenigen gegenüberliegt, die mit der den Klebstoff umfassenden Zwischenschicht (13) gekoppelt ist.

12. Mehrschichtmembran nach Anspruch 1, umfassend eine dritte Barriereschicht (15), die zwischen der Zwischenschicht (13) und der ersten Metallisierungsschicht (12) angeordnet ist und einen Lack mit Sauerstoffbarriereeigenschaften umfasst.

13. Mehrschichtmembran nach Anspruch 12, wobei der Lack mit Sauerstoffbarriereeigenschaften der dritten Barriereschicht (15) ausgewählt ist aus der Gruppe umfassend Lacke auf Basis von PVDC; Polyvinylalkoholharz als solchem oder modifiziert mit Silanen; Cellulose; Acrylharz; Epoxidharz.

14. Mehrschichtmembran nach Anspruch 12 oder 13, wobei der Lack mit Sauerstoffbarriereeigenschaften der dritten Barriereschicht (15) unter Verwendung eines Primers an die Metallisierungsschicht (12) gekoppelt ist.

15. Kapsel für lösliche Produkte oder Produkte, die dazu eingerichtet sind, durch unter Druck stehendes Wasser oder ein anderes Fluid aufgebrüht zu werden, umfassend einen Behälterkörper, der aus einem kompostierbaren oder biologisch abbaubaren Material hergestellt ist und ein hermetisch abgedichtetes Volumen an zwei gegenüberliegenden Basen definiert, in dem das lösliche oder aufbrühbare Produkt aufgenommen ist, wobei eine oder beide der zwei gegenüberliegenden Basen mit einer Mehrschichtmembran nach einem der Ansprüche 1 bis 14 ausgebildet ist.

## Revendications

1. Membrane multicouche compostable (10), pour cartouches contenant des produits solubles ou des produits adaptés à être infusés par de l'eau sous pression ou un autre fluide, comprenant :
- une première couche barrière (11) contenant un film barrière compostable selon la norme EN 13421 ;
- une première couche de métallisation (12) ayant une épaisseur ;
- une couche intermédiaire (13) contenant au moins un adhésif ;
- une deuxième couche barrière (14) contenant un film barrière compostable selon la norme EN 13421 ;
dans laquelle les films barrières de la première et de la deuxième couche barrière (11, 14) présentent des propriétés de résistance à l'oxygène, à l'eau, aux gaz ou aux arômes, ou une combinaison de celles-ci ;
**caractérisée en ce qu'**elle comprend :
- une couche (18) adjacente à la première couche barrière (11), sur un côté opposé au côté sur lequel la couche de métallisation (12) a été déposée, qui comprend un vernis résistant à la chaleur ;
- une deuxième couche de métallisation (17) disposée entre la couche intermédiaire (13) et ladite deuxième couche barrière (14) ;
- ledit film barrière compostable de ladite première couche barrière (11) et de ladite deuxième couche barrière (14) n'étant pas constitué de papier,
de telle sorte que ladite membrane multicouche compostable (10) présentera une valeur d'OTR inférieure à 0,5 cc/m²/jour/atm à 0 % d'humidité relative et à 23 °C, la valeur d'OTR dépendant de l'épaisseur de la couche de métallisation (12).

2. Membrane multicouche compostable selon la revendication 1, ayant une épaisseur (S) qui est comprise dans la plage de 40 à 200 µm.

3. Membrane multicouche compostable selon la revendication 1 ou 2, dans laquelle ladite membrane présente un module d'élasticité qui est compris dans la plage de 3 à 30 N, tel que mesuré selon l'ASTM F 1306.

4. Membrane multicouche compostable selon l'une quelconque des revendications précédentes, dans laquelle ledit film barrière compostable dudit premier film barrière (11) et dudit deuxième film barrière (14) est orienté ou non orienté.

5. Membrane multicouche compostable selon l'une quelconque des revendications 1 à 4, dans laquelle ledit adhésif est de préférence choisi dans le groupe constitué par : les adhésifs polyuréthane ; les adhésifs à un, deux ou plusieurs composants ; les adhésifs comprenant des isocyanates bloqués ; les adhésifs sensibles à la pression (PSA).

6. Membrane multicouche selon la revendication 1, comprenant une troisième couche barrière (15) contenant un vernis ayant des propriétés de barrière à l'oxygène, de telle sorte que ladite membrane multicouche (10) présentera une valeur d'OTR inférieure à 0,1 cc/m²/jour/atm.

7. Membrane multicouche selon la revendication 6, dans laquelle ledit vernis ayant des propriétés de barrière à l'oxygène est de préférence choisi dans le groupe comprenant les vernis à base de PVDC ; de résine d'alcool polyvinylique telle quelle ou modifiée avec des silanes ; de cellulose ; de résine acrylique ; de résine époxy.

8. Membrane multicouche selon la revendication précédente 1, dans laquelle ladite première couche de métallisation (12) et/ou ladite deuxième couche de métallisation (17) sont composées d'aluminium.

9. Membrane multicouche selon la revendication précédente 8, dans laquelle ladite première couche de métallisation (12) a une épaisseur qui est comprise dans la plage de 200 Å à 500 Å.

10. Membrane multicouche selon la revendication 1, dans laquelle ladite première couche de métallisation (12) et/ou ladite deuxième couche de métallisation (17) sont formées par dépôt d'oxydes de SiOx et d'AlOx.

11. Membrane multicouche selon la revendication 1, comprenant un filtre (16) qui est constitué d'un tissu non tissé et est adjacent à la deuxième couche barrière (14), sur un côté opposé à celui qui est couplé à la couche intermédiaire (13) comprenant l'adhésif.

12. Membrane multicouche selon la revendication 1, comprenant une troisième couche barrière (15), interposée entre ladite couche intermédiaire (13) et ladite première couche de métallisation (12), comprenant un vernis ayant des propriétés de barrière à l'oxygène.

13. Membrane multicouche selon la revendication 12, dans laquelle ledit vernis ayant des propriétés de barrière à l'oxygène de ladite troisième couche barrière (15) est choisi dans le groupe comprenant les vernis à base de PVDC ; de résine d'alcool polyvinylique telle quelle ou modifiée avec des silanes ; de cellulose ; de résine acrylique ; de résine époxy.

14. Membrane multicouche selon la revendication 12 ou 13, dans laquelle ledit vernis ayant des propriétés de barrière à l'oxygène de ladite troisième couche barrière (15) est couplé à ladite couche de métallisation (12) en utilisant un primaire.

15. Cartouche pour produits solubles ou produits adaptés à être infusés par de l'eau sous pression ou un autre fluide, comprenant un corps de récipient constitué d'un matériau compostable ou biodégradable, qui définit un volume hermétiquement scellé au niveau de deux bases opposées, dans lequel le produit soluble ou pouvant être infusé est contenu, dans laquelle l'une ou les deux desdites deux bases opposées est formée avec une membrane multicouche selon l'une quelconque des revendications 1 à 14.
